# EUROPEAN PATENT APPLICATION

(11) **EP 3 932 645 A1**
(43) Date of publication of application: **05.01.2022**
(21) Application number: 20184015.4
(22) Date of filing: 03.07.2020
(51) Int. Cl.: B29C 43/02, B29C 43/38, B29C 43/50, B29L 31/00, B29K 509/00, A01G 9/02

(54) **FLOWER POT WITH CURLED MOUTH AND MANUFACTURE METHOD THEREOF**

(71) Applicant: QingDao GreenShip Garden Supplies Co., Ltd, 266400 Shandong (CN)
(72) Inventor: Liu, Zixue, Henan Province, 450000 (CN)
(74) Representative: Keil & Schaafhausen Patentanwälte PartGmbB

(57) **Abstract**

The invention is related to the flower pot with curled mouth and its forming process. The lower part of the flower pot is extruded and shaped through the inner groove of compression molds. The upper part of pot is extruded into a natural shape and also kneaded by hands. This will solve the problem that it is difficult to demould traditional pot with small mouth and big body. The new process is simple and efficient. The product without the defect of parting line is more natural and beautiful.

## Description

### Technical field

The invention is related to the flower pot with curled mouth and the manufacture method thereof. The mouth of this flower pot has some characteristics: uneven thickness and different height, wavy, naturally curling inward and outward.

### Technological background

As the flower planting container, flower pots are widely used in various green decoration projects. Conventional flower pots have a regular flat surface on the mouth, relatively stiff in appearance. They lack natural elements when used as high-end decoration.

### Summary of the invention

In order to solve the above problem, the invention provides the flower pot with curled mouth and its forming process. The flower pot adopts the process of thermoplastic forming, based on the concept of shaping by the conventional compression mold. The flower pot is extruded into semi-finished pot through the special inner groove of compression molds, and finally shaped by hands. The upper edge of finished flower pot presents more vivid and natural shape features such as natural curling inward and outward and undulating waves shape. The flower pot can be used as traditional pot or as home decoration and craft display.

The invention is achieved as follows:
The flower pot with curled mouth and its forming process, the specific operation process is as follows:
First, according to the traditional extrusion process, mix the environmentally friendly plastic particles, calcium powder, and additives (pigments, UV-resistant materials, etc.) with a ratio of 100:50:3 and put mixture in the extruder. After being heated and plasticized in the extruder, it becomes the high-temperature plastic paste, which is extruded from the extruder; Then the high-temperature plastic paste we take out is 10%-50% larger than the mold cavity, and place it on male die with the inner groove. Close the male die and female die that are fixed on the hydraulic press. During closing molds, the gap between molds is continuously narrowed. The high-temperature plastic paste is extruded and moves in the mold cavity, and is gradually formed into a semi-finished pot from the bottom to the mouth. When the high-temperature plastic paste moves to the inner groove, the gap between the molds suddenly widens. The thrust force of the high-temperature plastic paste is weakened, and it begins to be squeezed out and diffuses in the natural state of the inner groove. But it will not touch the bottom of inner groove. When the male die and female die are tightly closed, the plastic paste in the mold cavity is squeezed and shaped between the inner wall of female die and the outer wall of male die. The plastic paste in inner groove is not shaped, and it is still in a natural state of high temperature. So it will not influence the demolding of semi-finished pot for there are no factors like thickness and shape. Finally, the male die and female die are separated and the semi-finished pot is taken out. The lower part of semi-finished pot is shaped, and the upper part is still in a natural state of high temperature, uneven thickness and partially curled. Then modify the mouth of pot into a wavy shape with naturally curling inward and outward by kneading by hands, and finally shaped after natural cooling.

The advantages of the invention:
1. The flower pot with curled mouth is produced by this process: The lower part of flower pot is extruded and shaped through the inner groove of the compression molds. The upper part of pot is extruded into a natural shape and then kneaded by hands. The forming process is very simple.
2. The forming process solves the problem that it is difficult to demould traditional pot with small mouth and big body.
3. The forming process overcomes the defect of overflow phenomenon of conventional pots, and creates new pots without parting lines.

### Description with drawings

In order to clearly illustrate the technical process of invention, the following drawings are provided as a reference.
Figure 1 is a schematic diagram of the forming mold structure;
Figure 2 is a schematic diagram of the formation of the flower pot with curled mouth;
Figure 3 is a schematic diagram of the appearance of the flower pot with curled mouth;
Figure 4 is a schematic diagram of the appearance of the flower pot with curled mouth in oval and square shape;
Figure 5 is a schematic diagram of the appearance of the flower pot with natural mouth curling inward;
Figure 6 is a schematic diagram of the appearance of the flower pot with natural mouth.

In the drawings: 1. female die 2. male die 3. inner groove 4. plastic paste 5. mold cavity 6. semi-finished pot

### Detailed description of process

The following includes more details about forming process. The invention is not limited to the following examples.

### Example 1

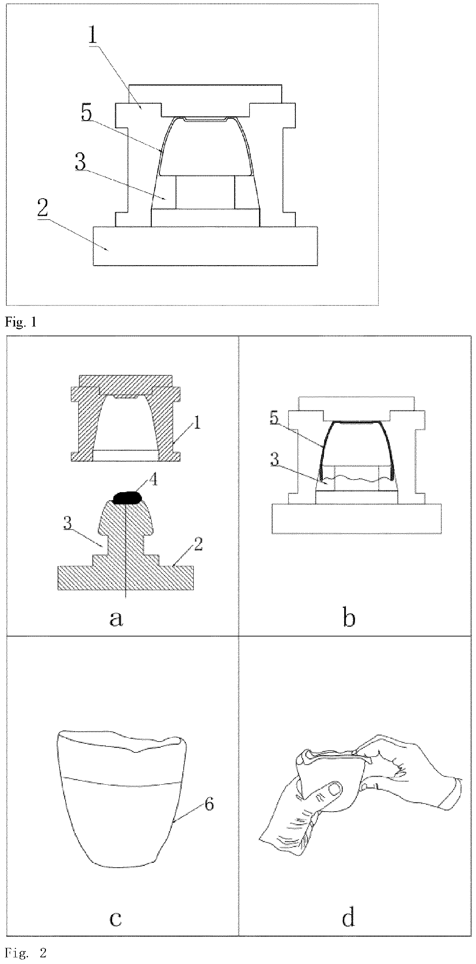

Figure 2 is a schematic diagram of the formation of the flower pot with curled mouth. The following is the forming process.

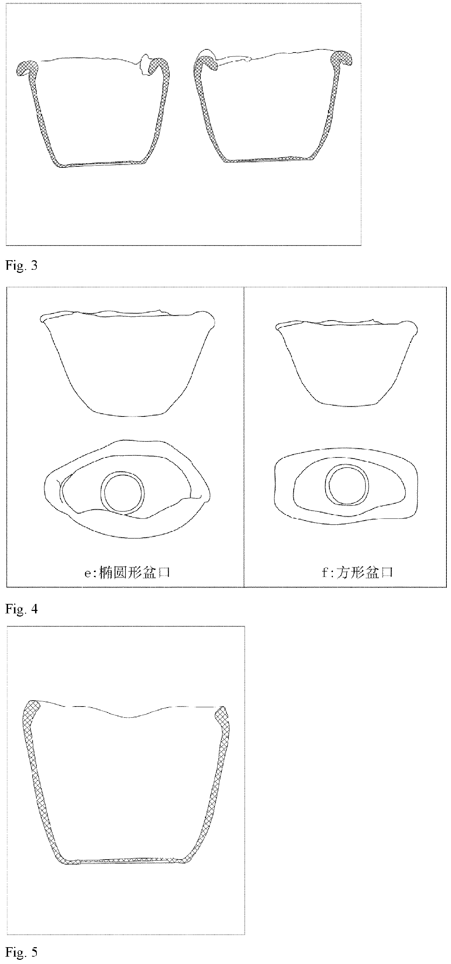

According to the traditional extrusion process, mix the environmentally friendly plastic particles, calcium powder, and additives (pigments, UV-resistant materials, etc.) with a ratio of 100:50:3 and put mixture in the extruder. After being heated and plasticized in the extruder, it becomes the high-temperature plastic paste 4, which is extruded from the extruder; Then the high-temperature plastic paste 4 we take out is 10%-50% larger than mold cavity 5, and place it on male die 2 with the inner groove. Close the male die 2 and female die 1 that are fixed on the hydraulic press. During closing molds, the gap between molds is continuously narrowed. The high-temperature plastic paste 4 is extruded and moves in the mold cavity 5, and is gradually formed into a semi-finished pot from the bottom to the mouth. When the high-temperature plastic paste moves to the inner groove 3, the gap between the molds suddenly widens. The thrust force of the high-temperature plastic paste is weakened, and it begins to be squeezed out and diffuses in the natural state of the inner groove 3. But it will not touch the bottom of inner groove 3. When the male die 2 and female die 1 are tightly closed, the plastic paste in the mold cavity is squeezed and shaped between the inner wall of female die and the outer wall of male die. The plastic paste in inner groove 3 is not shaped, and it is still in a natural state of high temperature. So it will not influence the demolding of semi-finished pot 6 for there are no factors like thickness and shape. And the male die and female die are separated and the semi-finished pot 6 is taken out. The lower part of semi-finished pot is shaped, and the upper part is still in a natural state of high temperature, uneven thickness and partially curled. Then modify the mouth of pot into a wavy shape with naturally curling inward and outward by kneading by hands, and finally shaped after natural cooling. Figure 3 is a schematic diagram of the forming appearance of flower pot with curled mouth. The upper part of semi-finished pot 6 is still in a natural state of high temperature. The mouth of semi-finished pot can be kneaded into different shapes by hands, like oval, square or other special shapes in Figure 4.

### Example 2

Referring to the forming process of Example 1, skip the step of kneading by hands, and take the semi-finished pot 6 out of the mold with inner groove and make it naturally cool. The pot mouth shrinks inwards during the cooling process because of its high temperature. Referring to Figure 5, the shaped pot mouth has a natural wave-like appearance, curling inward.

### Example 3

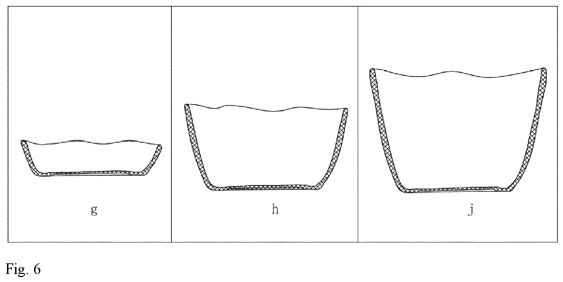

Referring to the forming process of Example 1, the volume of high-temperature plastic paste we take out can be 30%-90% of the volume of mold cavity 5. During the closing process of the male die and female die, the plastic paste is only extruded and shaped in the mold cavity 5 and does not move into the inner groove 3. Therefore, the flower pot is completely shaped by mold, and the height of pot depends on the weight of the plastic paste. Uneven thickness and undulating waves. Picture g, h, and j in Figure 6 show the appearance of pot with natural mouth, which is formed by process in Example 3.

## Claims

1. Manufacture method of a flower pot with curled mouth, **characterized in that** the method includes the following steps:
(1) according to the traditional extrusion process, mixing the environmentally friendly plastic particles, calcium powder, and additives (pigments, UV-resistant materials, etc.) with a ratio of 100:50:3 and putting the mixture in the extruder, wherein after being heated and plasticized in the extruder, the mixture becomes the high-temperature plastic paste 4, and is then extruded from the extruder;
(2) taking the high-temperature plastic paste 4, whose volume is 110%-150% of the volume of the mold cavity 5, and placing it on a male die 2 with an the inner groove 3, closing the male die 2 and a female die 1 that are fixed on a hydraulic press,. wherein when the dies are being closed, the gap between dies is continuously narrowed, and the high-temperature plastic paste 4 is extruded and moves in the mold cavity 5, and is gradually formed into a semi-finished pot from the bottom to the mouth, wherein when the high-temperature plastic paste 4 moves to the inner groove 3, the gap between the molds suddenly widens, and the thrust force of the high-temperature plastic paste 4 is weakened, and it begins to be squeezed out and diffuses in the natural state of the inner groove 3 while not touching the bottom of inner groove 3, and when the male die 2 and female die 1 are tightly closed, the plastic paste in the mold cavity is squeezed and shaped between the inner wall of female die 1 and the outer wall of male die 2, wherein the plastic paste in the inner groove 3 is not shaped and is still in a natural state of high temperature, so that it will not influence the demolding of semi-finished pot 6 for there are no factors like thickness and shape.
(3) separating the male die 2 from the female die 1 and taking the semi-finished pot 6 out, wherein the lower part of semi-finished pot is shaped whereas the upper part is still in a natural state of high temperature, uneven thickness and partially curled, modifying the mouth of pot into a wavy shape with naturally curling inward and outward by kneading by hands, and finally shaping the pot through natural cooling.

2. The manufacture method of a flower pot with curled mouth according to claim 1, **characterized in that** taking out the semi-finished pot 6, and when the upper part of the semi-finished pot 6 is still of high temperature, kneading the mouth of semi-finished pot into different shapes by hands, so that the mouth of the pot has an oval, square or other special shapes.

3. The manufacture method of a flower pot with curled mouth according to claim 1, **characterized in that** kneading by hands in step (3) can be skipped, and the semi-finished pot can be directly taken out of the mold with inner groove 3 to form a flower pot with a natural mouth.

4. The manufacture method of a flower pot with curled mouth according to claim 1, **characterized in that** the volume of high-temperature plastic paste taken out in step (2) can be 30%-90% of the volume of mold cavity 5, and when the male die and female dies are being closed, the plastic paste is only extruded and shaped in the mold cavity 5 and does not move into the inner groove 3. so that the flower pot is completely shaped by mold, and the height of pot depends on the weight of the plastic paste and the mouth of the pot has uneven thickness and undulating waves.

5. The manufacture method of a flower pot with curled mouth according to claim 1, **characterized in that** the bottom of the male die 2 has the inner groove 3, and the height of the inner groove 3 is about one-fifth to four-fifths of the finished pot's.

6. A flower pot with curled mouth produced by the manufacture method according to claim 1, **characterized in that** mouth of the flower pot has natural features including uneven and undulating thickness, a wavy shape and curling inward and outward.

7. A flower pot with curled mouth produced by the manufacture method according to claim 1, **characterized in that** the mouth of the pot has an oval, square or other special shapes.
